# EUROPÄISCHE PATENTSCHRIFT

(11) **EP 1 147 841 B1**
(45) Veröffentlichungstag und Bekanntmachung des Hinweises auf die Patenterteilung: **19.02.2003**
(21) Anmeldenummer: 01106297.3
(22) Anmeldetag: 15.03.2001
(51) Int. Cl.: B23C 5/10

(54) **Schneidplatte und Zerspanungswerkzeug zum Fräsen**
Cutting insert and tool for milling
Plaquette de coupe et outil pour fraiser

(30) Priorität: 19.04.2000 DE 10019398
(43) Veröffentlichungstag der Anmeldung: 24.10.2001
(73) Patentinhaber: WALTER AG, 72072 Tübingen (DE)
(72) Erfinder: Villa, Stefano, 22100 Como (IT)
(74) Vertreter: Patentanwälte Rüger, Barthelt & Abel

(56) Entgegenhaltungen:
- EP-A- 0 130 592
- DE-A- 3 922 463

## Beschreibung

Die Erfindung betrifft eine Schneidplatte, insbesondere eine Wendeschneidplatte sowie ein Zerspanungswerkzeug mit zwei Schneidplatten.

Rotierende Schneidwerkzeuge mit mehreren Schneidplatten, bei denen sich Schneidkanten von einem Werkzeugumfangsbereich bis zu der Drehachse erstrecken, sind bekannt. Bspw. offenbart die EP 0683002 B1 ein solches Fräswerkzeug. Es weist einen Werkzeugkörper mit einem kugelförmigen Endbereich auf. In diesem kugelförmigen Endbereich sind Schneidkanten ausgebildet und zwischen diesen sind Spannuten vorgesehen. Die Schneidkanten sind unmittelbar an dem Werkzeugkörper ausgebildet. Bei Verschleiß der Schneidkanten muss das Werkzeug im Ganzen gewechselt oder, falls möglich, nachgeschliffen werden.

Nachdem dies in einigen Fällen als unzweckmäßig angesehen wird und außerdem an den Schneidkanten hohe Materialbeanspruchungen vorliegen, werden an Zerspanungswerkzeugen häufig Schneidplatten aus Hartmetall oder anderen Hartstoffen eingesetzt. Diese sind an dem Werkzeugkörper befestigt.

Dazu ist aus der EP 0502543 B1 ein Kugelstirnfräser bekannt, an dessen Werkzeugkörper zwei Schneidplatten gehalten sind. Der Werkzeugkörper weist einen halbkugelförmig gerundeten Endbereich auf, an dem zwei Plattensitze ausgebildet sind. Zwei Schneidplatten, die jeweils eine bogenförmig gerundete Schneidkante aufweisen, sind zur Befestigung an diesen Plattensitzen vorgesehen. Die Schneidkanten erstrecken sich von dem Umfangsbereich des Kugelstirnfräsers etwa bis zu der Drehachse.

Dieses Schneidwerkzeug weist gegenüber dem vorgenannten Stand der Technik, bei dem an dem kugelförmigen Fräserkopf viele Schneidkanten ausgebildet waren, lediglich zwei Schneidkanten auf. Im Sinne einer Erhöhung der Zerspanungsleistung ist jedoch eine höhere Schneidenzahl wünschenswert. Dazu ist es aus der DE 3922463 bekannt, bei einem Kugelstirnfräser an dem entsprechenden Endbereich des Werkzeugkörpers vier Plattensitze vorzusehen. An jedem Plattensitz ist eine Schneidplatte gehalten, wobei die Schneidplatten individuell festgeklemmt sind.

Bei diesem Kugelkopffräser können die Schneidkanten der Schneidplatten nicht bis zu der Drehachse geführt werden. Außerdem werden die Plattensitze, zumindest bei kleineren Durchmessern, relativ filigran. Insgesamt ergibt sich eine erhebliche Schwächung des Werkzeugkörpers durch die Plattensitze gerade in dem Bereich, in dem große Kräfte auftreten - nämlich in dem Bereich der Plattensitze.

Von der Offenbarung der DE-A-3 922 463 ausgehend ist es Aufgabe der Erfindung, eine Möglichkeit zu schaffen, mit der ein Fräswerkzeug mit Hartstoff-Schneidkanten mit hoher Schneidenzahl auch im Stirnbereich aufbaubar ist.

Diese Aufgabe wird mit dem Schneidkörper nach Anspruch 1 gelöst.

Der erfindungsgemäße Schneidkörper ist ein vierflügliger, in Stirnansicht kreuzförmiger Körper, der vier Schneidkanten aufweist. Dies schafft die Grundlage für Schneidkantengeometrien, bei denen sich im Stirnbereich des Fräswerkzeugs vier Schneidkanten treffen. Der Werkzeugkörper muss sich nicht bis zur Werkzeugstirn erstrecken. Während bei Verwendung mehrerer Schneidplatten mit jeweils eigenen Plattensitzen jede Schneidplatte die auftretenden Kräfte jeweils separat auf den Werkzeugkörper übertragen muss, werden die bei dem vierflügligen Schneidkörper an einem Flügel auftretenden Kräfte durch alle Flügel gemeinsam auf den Werkzeugkörper übertragen. Es ergibt sich dabei eine erheblich steifere Lagerung des Schneidkörpers an dem Werkzeugkörper - im Vergleich zu Lösungen mit separaten Schneidplatten.

Außerdem ist die Wartung wesentlich erleichtert. Durch die Lagerichtige Montage des Schneidkörpers an dem Werkzeugkörper sind alle Schneidkanten mit der dem Schneidkörper eigenen Genauigkeit in Bezug aufeinander justiert. Gegenüber Lösungen mit mehreren Schneidplatten und mehreren Plattensitzen lassen sich mit der erfindungsgemäßen Lösung, die für vier Schneidplatten nur einen Hartmetall-Schneidkörper und nur einen Plattensitz vorsieht, höhere Genauigkeiten erzielen.

Es ist auch möglich, den Schneidkörper zweiteilig auszubilden. Er besteht dann z.B. aus zwei untereinander gleich ausgebildeten plattenförmigen Stücken, die ineinandergesteckt werden können. Sie weisen dazu jeweils eine Ausnehmung auf, die dazu geeignet ist, eine weitere Schneidplatte aufzunehmen. Damit können zwei Schneidplatten einander räumlich überkreuzend und ineinander greifend angeordnet werden. Dies schafft zum einen die Möglichkeit, die Schneidplatten dichtestmöglich aneinander heranzuführen und somit auch im Fräserstirnbereich eine hohe Schneidenzahl zu erzielen, als auch wiederum die Voraussetzung zur einfachen und sicheren Lagerung der Schneidplatten an einem Werkzeugkörper. Bspw. kann eine Schneidplatte durch ein Befestigungsmittel direkt geklemmt werden, während die andere Schneidplatte dann von der erstgenannten Schneidplatte am Platz festgehalten wird. Somit kann es gelingen, mit einem einzigen Klemm- oder Befestigungsmittel beide Schneidplatten an dem Plattensitz zu sichern.

Die einfache und hinterschneidungsfreie Form der Schneidplatten gestattet es, diese aus Hartmetall (Sinterhartmetall) oder bedarfsweise auch aus einem anderen Hartstoff auszubilden. Die Herstellung erfolgt z.B. durch Pressen und Sintern von Hartmetallpulver. Dabei ist die Schneidplatte bei einer bevorzugten Ausführungsform so ausgebildet, dass die Ausnehmung dazu eingerichtet ist, eine weitere identische Schneidplatte aufzunehmen. Dazu weist die Ausnehmung der Schneidplatte zwei einander gegenüberliegende, sich entlang einer Einsteckrichtung erstreckende Ausrichtflächen auf, die beim Einstecken der Schneidplatten ineinander Führungsflächen bilden. Die Ausricht- oder Führungsflächen stimmen dabei in ihrer Form mit den entsprechenden zugeordneten Flanken der anderen, identischen Schneidplatte überein, die in die Ausnehmung einzustecken ist. Bspw. sind die Flächen plan ausgebildet; es können an den Plattenflanken auch Rippen oder andere Vorsprünge ausgebildet sein, die in entsprechende Ausnehmungen an den Nutflanken passen. Die identischen Schneidplatten sind durch Anlage der Führungs- oder Ausrichtflächen an den jeweiligen Flanken der anderen Schneidplatte in Bezug aufeinander ausgerichtet.

Zur Axialausrichtung, d.h. der Festlegung der Relativposition der Schneidplatten in Bezug aufeinander in Einsteckrichtung, dient vorzugsweise jeweils eine an der Schneidplatte vorgesehene Ausrichtfläche, die quer zu der Einsteckrichtung orientiert ist. Diese Ausrichtfläche bildet gewissermaßen einen Anschlag beim Einschieben der Schneidplatten in die jeweilige Ausnehmung der jeweils anderen Schneidplatte.

Dabei wird bevorzugt, die als Anschlagflächen dienenden Ausrichtflächen jeweils in die Schneidplattenmitte zu legen, so dass die ineinander gesteckten Schneidplatten keinen Axialversatz aufweisen. Die Einsteckrichtung stimmt bei bevorzugten Anwendungen mit der Drehachse eines drehenden Werkzeugs überein, so dass die Außenkonturen bzw. Schneidkanten der Schneidplatten beim Drehen des Schneidwerkzeugs um seine Drehachse auf einer gemeinsamen Fläche liegen.

Die Schneidplatte ist vorzugsweise bezüglich einer ersten Symmetrielinie symmetrisch ausgebildet, die quer zu der Einführrichtung und somit auch quer zu dem Einführschlitz (d.h. zu der Ausnehmung) ausgerichtet ist. Dadurch kann erreicht werden, dass zwei identische Schneidplatten, wenn sie ineinander gesteckt sind, einen Schneidkörper bilden, der in zwei Einbaupositionen an einem Werkzeugkörper verwendbar ist. Die erste Einbauposition nutzt der Ausnehmung benachbarte Schneidkanten der ersten Schneidplatte und von der Ausnehmung abliegende Schneidkanten der zweiten Schneidplatte. In der zweiten Einbaulage sind die Verhältnisse dann gerade umgekehrt, d.h. der aus den beiden zusammengesteckten Schneidplatten zusammengesetzte Körper kann um 180° gewendet werden.

Zusätzlich ist die Schneidplatte vorzugsweise zu einer zweiten Symmetrielinie liniensymmetrisch ausgebildet, die wie die erste Symmetrielinie durch die Schneidplattenmitte geht und mit der Einführrichtung übereinstimmt. Dadurch wird es möglich, an jeder Schneidplatte zwei aktive Schneidkanten vorzusehen, wodurch insgesamt wieder vier Schneidkanten erhalten werden, die sich von dem Umfangsbereich des Zerspanungswerkzeugs bis zu seiner Drehachse oder wenigstens nahe an diese heran erstrecken. Es ergibt sich die Schneidenzahl z = 4. Die Schneiden (Schneidkanten) erstrecken sich vorzugsweise unterbrechungsfrei von dem Außenumfang zu der, oder nahe an die, Drehachse.

Die Herstellung des Scheidkörpers (ein- oder zweiteilig) kann bspw. mit einem Metallspritzgießverfahren erfolgen, bei dem mittels geringer Kunststoffzusätze plastifiziertes Hartmetallpulver im Spritzgießverfahren vorgeformt, und der so erhaltene Formling gebacken bzw. gesintert wird.

Bei einem solchen einstückigen Schneidkörper verteilen sich die an einem Flügel bzw. einer Schneidkante angreifenden Schneidkräfte auf alle Flügel und werden deshalb gleichmäßig in den Werkzeugkörper abgeleitet. Dies ermöglicht insbesondere die Befestigung des Schneidkörpers mit einer Klemmpratze, die nicht alle Flügel des Schneidkörpers festklemmt. Die Flanken (Vorder- und Rückseite) jedes Flügels sind bei einer bevorzugten Ausführungsform vorzugsweise durch Planflächen gebildet. Dies erleichtert die pulvermetallurgische Herstellung sowie die Klemmung in dem Werkzeugkörper.

Ein entsprechendes Zerspanungswerkzeug benötigt mit diesen Schneidplatten lediglich einen einfach gestalteten Plattensitz. Dieser ist so ausgebildet, dass wenigstens eine der Schneidplatten, wenn sie ineinander gesteckt sind, bzw. zwei Flügel des Schneidkörpers an dem Plattensitz festgeklemmt werden können.

Bei der zweiteiligen Ausführungsform genügt es, wenn der Werkzeugkörper eine einzige Klemmpratze aufweist, die der Schneidplatte zugeordnet ist, deren Ausnehmung von der Spitze des Zerspanungswerkzeugs weg weist. Durch Festklemmen dieser Schneidplatte kann die zweite Schneidplatte gesichert werden, die in Axialrichtung mit ihrer Anschlagfläche an der entsprechenden Ausrichtung- und Anschlagfläche der festgeklemmten Schneidplatte gehalten ist. Sie ist somit formschlüssig gehalten, während die andere Schneidplatte axial von dem Werkzeugkörper weg reibschlüssig und auf den Werkzeugkörper hin formschlüssig gehalten sein kann. Anstelle der reibschlüssigen Klemmung können für die Schneidplatte jedoch auch anderweitige Befestigungen vorgesehen werden. Ein wesentlicher Vorteil der Klemmung des aus den beiden zusammengesteckten Schneidkörpers mittels einer einzigen Klemmpratze liegt in der Einfachheit des Plattensitzes und in der einfachen Handhabung. Es genügt eine einzige Befestigungsschraube und der Plattensitz kann sehr steif ausgebildet werden.

Entsprechendes gilt für den einstückigen Schneidkörper. Die Klemmpratze kann ein von dem Werkzeugkörper getrenntes Teil oder mit diesem einstückig ausgebildet sein. Dies hat den Vorteil, dass die Klemmpratze verbessert zur Drehmomentübertragung beiträgt.

Das erfindungsgemäße Zerspanungswerkzeug eignet sich insbesondere als Schlichtwerkzeug. Die möglicherweise unterschiedliche Spannung der einzelnen Schneidplatten oder Flügel des Schneidkörpers ist dabei unschädlich. Positiv wirkt sich aber die unterbrechungsfreie Ausbildung der Schneidkanten aus. Vorteilhaft ist es auch, wenn die Flügel in einheitlichen Winkelabständen von z.B. 120° oder 90° angeordnet sind. Dies ergibt einen gleichmäßigen Betrieb des Werkzeugs. Der einstückige Werkzeugkörper hat vorzugsweise in Axialrichtung orientierte Flügel. Ein Axialspanwinkel der Schneidkanten ist aber erreichbar, indem diese schräg zu den Flügeln angeordnet sind. Bedarfsweise können die Flügel des einstückigen Werkzeugkörpers auch einen Axialwinkel (und falls erforderlich auch einen Radialwinkel) aufweisen.

Einzelheiten vorteilhafter Ausführungsformen der Erfindung sind Gegenstand von Unteransprüchen und ergeben sich aus der Zeichnung sowie der zugehörigen Beschreibung. In der Zeichnung ist ein Ausführungsbeispiel der Erfindung veranschaulicht. Es zeigen:
Fig. 1 eine erfindungsgemäße Schneidplatte in einer perspektivischen und vereinfachten Darstellung,
Fig. 2 die Schneidplatte nach Figur 1, in einer Seitenansicht,
Fig. 3 zwei gleichartige Schneidplatten nach Figur 1 oder 2, um 90° gegeneinander verdreht, in nicht zusammengestecktem Zustand,
Fig. 4 die Schneidplatten nach Figur 3, in zusammengestecktem Zustand in Seitenansicht,
Fig. 5 die Schneidplatten nach Figur 4, in einer Ansicht mit Blickrichtung in Richtung der Drehachse,
Fig. 6 einen aus zwei Schneidplatten zusammengesetzten Schneidenkörper nach Figur 5 und einen zugehörigen Werkzeugkörper in perspektivischer Explosionsdarstellung,
Fig. 7 ein Zerspanungswerkzeug mit zwei Schneidplatten nach den Figuren 1 bis 5,
Fig. 8 einen einstückig ausgebildeten Schneidkörper 1a, in einer Ansicht mit Blickrichtung auf seine Drehachse, und
Fig. 9 ein mit dem Schneidkörper nach Figur 8 bestücktes Schneidwerkzeug, bei einem Zerspanungsvorgang.

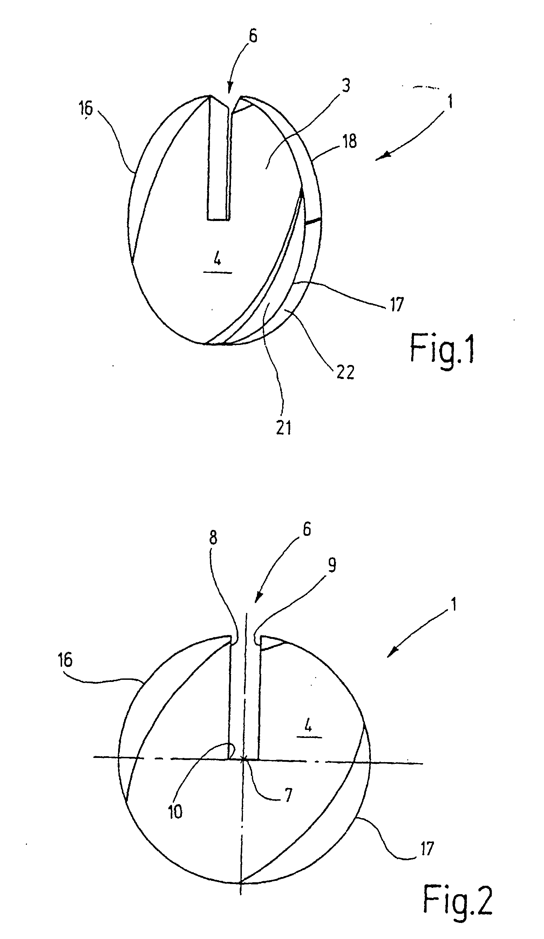

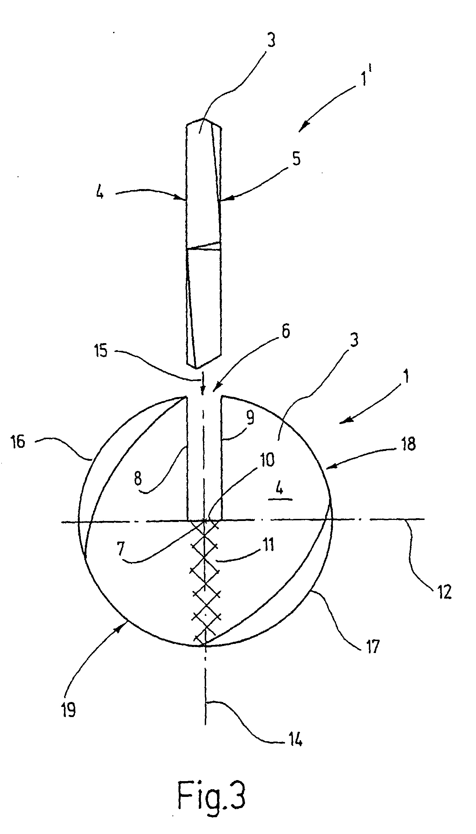

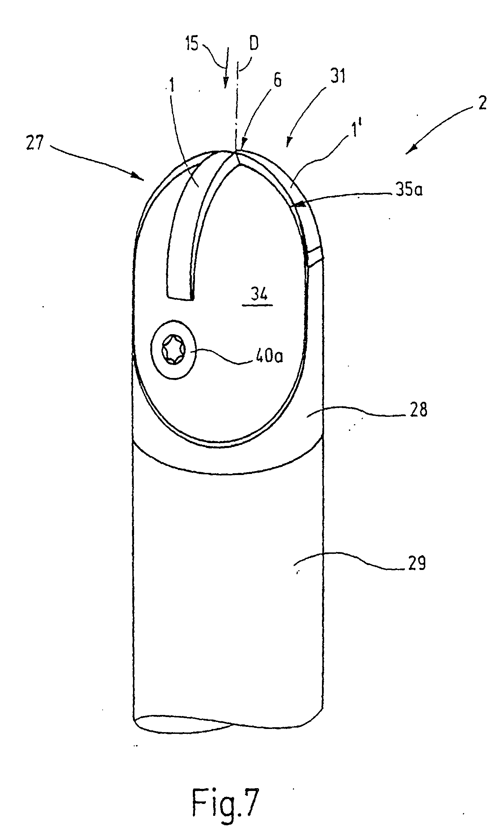

In Figur 1 ist eine Schneidplatte 1 veranschaulicht, die zur Bestückung eines Zerspanungswerkzeugs wie bspw. eines Kugelstirnfräsers 2 nach Figur 7 dient. Die Schneidplatte 1 weist einen Grundkörper 3 auf, der etwa scheibenförmig ausgebildet ist. Er wird durch zwei einander gegenüberliegende Flachseiten 4, 5 begrenzt, wie sie bspw. aus Figur 3, oben ersichtlich sind. Die Flachseiten sind zueinander parallel orientiert und etwa kreisförmig berandet. Eine andere Berandung ist jedoch bei gewünschten abweichenden Geometrien ebenfalls möglich.

In dem Grundköper 3 ist eine schlitzförmige Ausnehmung 6 vorgesehen, die einen Aufnahmeschlitz für eine andere Schneidplatte bildet. Die Ausnehmung 6 ist nach drei Seiten offen und erstreckt sich, wie insbesondere aus Figur 2 hervorgeht, von dem Rand der Schneidplatte 1 bis zu ihrer Schneidplattenmitte 7. Die Ausnehmung 6 wird dabei durch zwei zueinander parallele und voneinander beabstandete Ausrichtflächen 8, 9 und eine weitere Ausrichtfläche 10 begrenzt, die rechtwinklig zu den Ausrichtflächen 8, 9 gerichtet ist und durch die Schneidplattenmitte 7 geht. Im Anschluss an die Ausrichtfläche 10, die eine Anschlag- oder Stoppfläche für eine jeweils andere einzusteckende Schneidplatte 1' bildet (Figur 3), erstrecken sich Lagerflächenbereiche 11 über die jeweilige Flachseite 4, 5 der Schneidplatte 1. Die Dicke des Grundkörpers 3 stimmt mit der Breite der Ausnehmung 6 überein. Mit anderen Worten, der Abstand der beiden Lagerflächen der Flachseiten 4, 5 voneinander stimmt mit dem Abstand der Ausrichtflächen 8, 9 voneinander überein. Dabei sind die Maße so festgelegt, dass der Grundkörper 3 der Schneidplatte 1' ohne zu klemmen in den Schlitz 6 der Schneidplatte 1 eingeführt werden kann und dennoch spielfrei in diesem sitzt. Gleiches gilt umgekehrt.

Die Schneidplatte 1 ist doppelt symmetrisch ausgebildet. Eine erste Symmetrielinie 12 erstreckt sich durch die Schneidplattenmitte 7 und parallel zu der Ausrichtfläche 10, d.h. quer zu dem Schlitz 6. Eine zweite Symmetrielinie 14 erstreckt sich wiederum durch die Schneidplattenmitte 7, jedoch parallel zu dem Schlitz 6, d.h. zu seinen Ausrichtflächen 8, 9 und damit parallel zu der Platteneinsteckrichtung, die in Figur 3 durch einen Pfeil 15 angedeutet ist.

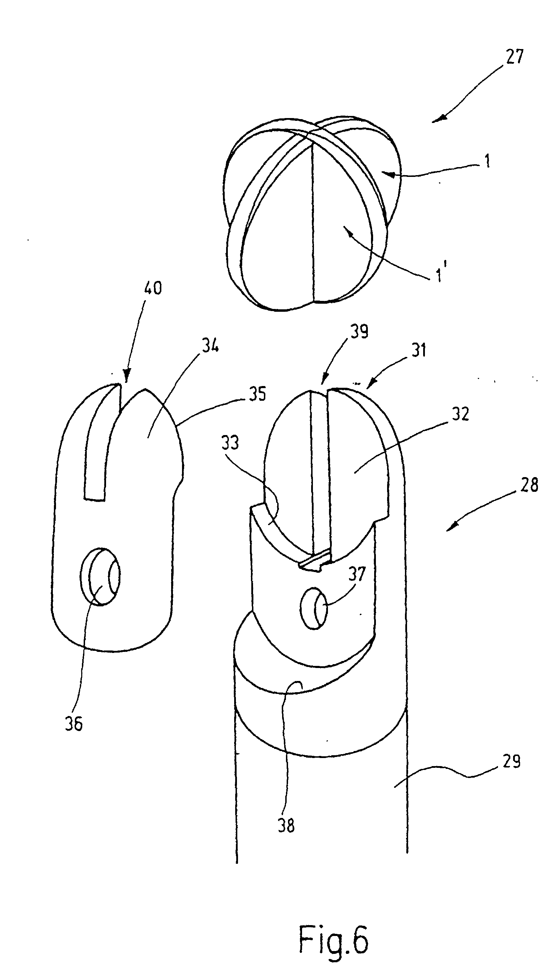

An dem Rand der Schneidplatte 1 sind insgesamt vier durchgehende Schneidkanten 16, 17, 18, 19 ausgebildet (Z=4). Dabei sind die Schneidkanten 16, 17 der Flachseite 4 und die Schneidkanten 18, 19 der Flachseite 5 zugehörig. Wie aus Figur 1 und 5 hervorgeht, schließen die Schneidkanten 16, 18 unmittelbar an den Schlitz 6 an. Dagegen sind die Schneidkanten 17, 19 an der schlitzabgewandten Seite der Schneidplatte 1 bzw. 1' angeordnet, so dass hier der Schneidkantenverlauf nicht durch den Schlitz 6 unterbrochen ist. Die Schneidkanten sind jeweils zwischen einer Spanfläche 21 und einer Freifläche 22 ausgebildet. An der Schneidplatte sind die Spanfläche 21 und die Freifläche 22 z.B. so angeordnet und ausgerichtet, dass sich eine positive Schneidengeometrie, d.h. ein positiver Spanwinkel und ein positiver Freiwinkel ergeben, wenn die Schneidplatten 1 ohne Axial- und Radialspanwinkel in einem Werkzeugkörper gehalten sind. Bedarfsweise kann auch mit negativem Spanwinkel oder vollständig negativer Schneidengeometrie gearbeitet werden (auch negativer Axialspanwinkel). Die Schneidkanten 16 bis 19 erstrecken sich jeweils wenigstens entlang eines Viertels des Umfangs des Grundkörpers 3. Wie aus Figur 3 ersichtlich, sind die Schneidkanten 16, 17 der Flachseite 4 und entsprechend auch die Schneidkanten 18, 19 der Flachseite 5 einander diagonal gegenüberliegend angeordnet. Durch die Liniensymmetrie bezüglich der ersten Symmetrielinie 12 ist die Schneidkante 16 symmetrisch zu der in Figur 3 verdeckten Schneidkante 19 und die Schneidkante 17 zu der Schneidkante 18. Bezüglich der zweiten Symmetrielinie 14 sind die Schneidkanten 16 und 18 sowie 17 und 19 liniensymmetrisch.

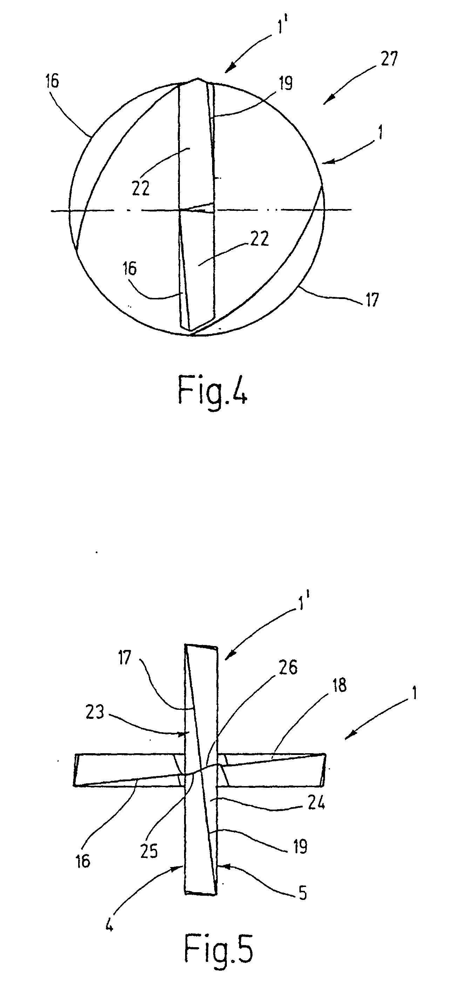

Wie insbesondere aus Figur 4 hervorgeht, können die Schneidplatten 1, 1' mit ihren Ausnehmungen 6 so ineinander gesteckt werden, dass sich ein kompakter Schneidenkörper mit formschlüssig aneinander ausgerichteten Schneidplatten 1, 1' ergibt. In zusammengebautem Zustand liegen dabei die Ausrichtflächen 10 der beiden Schneidplatten 1, 1' aneinander an. Die Schneidkanten 16 bis 19 der beiden Schneidplatten 1, 1' liegen auf ein- und demselben gedachten Rotationskörper, bspw. einer Kugel. Die Schneidkanten 16, 17, 18, 19 sind um 90° in Bezug auf die zweite Symmetrieachse 14 versetzt. Allerdings können durch entsprechende Neigung und Ausbildung der Anlageflächen 8, 9 auch andere Teilungen eingestellt werden.

Wie aus Figur 5 hervorgeht, gehen die Schneidkanten 17, 19 absatz- und unterbrechungslos ineinander über, wobei sie in einer gemeinsamen Ebene liegen. Die gemeinsame Ebene geht durch die zweite Symmetrielinie 14 und schneidet den Rand des Grundkörpers 3 etwa auf Höhe der ersten Symmetrielinie 12. Die Symmetrielinie 14, die mit der Drehachse eines entsprechenden Zerspanungswerkzeugs (Bohr- oder Fräswerkzeugs) identisch ist, schneidet die ineinander übergehenden Schneidkanten 17, 19 in einem Punkt, bei dem jeweils eine Ausnehmung 23, 24 zur Festlegung der Schneidkante 17, 19 in einer stumpfwinkligen Kante 25, 26 endet. Die stumpfwinkligen Kanten 25, 26 gehen somit von der Drehachse oder der zweiten Symmetrielinie 14 aus, zu den Flachseiten 4, 5, wo die Schneidkanten 16, 18 der jeweils anderen Schneidplatte 1, 1' anschließen.

Ein solcher Schneidkörper 27 ist zur Aufnahme in einem in Figur 6 veranschaulichten Werkzeugkörper 28 vorgesehen. Der Werkzeugkörper 28 weist einen im Wesentlichen zylindrischen Schaft 29 auf, der in seinem Endbereich einseitig abgeflacht und sphärisch gewölbt ist. An seinem freien Ende weist der Werkzeugkörper 28 einen Plattensitz 31 auf, zu dem eine Planfläche 32 gehört. Schaftseitig geht die Planfläche 32 in eine bogenförmig gekrümmte Seitenanlagefläche 33 über, die als axiale Stützfläche für den Schneidenkörper 27 dient. Dem Plattensitz 31 ist eine Spannpratze 34 zugeordnet, die eine Spannfläche 35 zum Festklemmen der Schneidplatte 1' aufweist und in montiertem Zustand der Planfläche 32 gegenüberliegt. Die Spannpratze ist mit einer Befestigungsöffnung 36 versehen, der eine in dem Werkzeugkörper 29 der Seitenanlagefläche 33 benachbart angeordnete Gewindebohrung 37 zugeordnet ist. Neben dieser ist an dem Werkzeugkörper 28 eine Stützfläche 38 ausgebildet, an der sich die Spannpratze 34 beim Festziehen einer Befestigungsschraube abstützt. Quer zu einem zwischen der Spannfläche 35 und der Planfläche 32 gebildeten Klemmspalt 35a ist ein Aufnahmespalt 39, 40 vorgesehen, der den Plattensitz 31 rechtwinklig zu der Planfläche 32 durchsetzt. Der Aufnahmespalt 39, 40 dient der formschlüssigen Lagerung der Schneidplatte 1 und weist somit eine Spaltweite auf, die mit der Dicke des Grundkörpers 3 übereinstimmt. Alternativ zu der veranschaulichten Ausführungsform kann die Spannpratze mit dem Werkzeugkörper 28 auch einstückig ausgebildet sein. Dazu kann eine elastische Verbindung im Bereich der Stützfläche 38 dienen.

Das komplett montierte Zerspanungswerkzeug 2 ist gesondert in Figur 7 veranschaulicht. Wie ersichtlich, ist mit der Spannpratze 34 die Schneidplatte 1' an bzw. in dem Plattensitz 31 festgeklemmt. Die Schneidplatte 1' ist mit der Schneidplatte 1 formschlüssig verbunden. Die Schneidplatten 1, 1' greifen mit ihren Ausnehmungen 6 ineinander und bilden den vierflügligen Schneidkörper 27. Die Ausrichtung der Schneidplatte 1' erfolgt in Axialrichtung durch Anlage an der Seitenanlagefläche 33. Durch die Spannung gegen die Planfläche 32 wird die Schneidplatte 1' zusätzlich in einer ersten Radialrichtung senkrecht zu der Planfläche 32 ausgerichtet. Die Ausrichtung in der dazu rechtwinkligen Radialrichtung, d.h. parallel zu der Planfläche 32, wird hingegen durch die Schneidplatte 1 übernommen, die in dem Aufnahmespalt 39 in dieser, zu der Planfläche 32 parallelen Richtung fixiert ist.

Die Schneidplatte 1 ist bezüglich der ersten Radialrichtung, d.h. rechtwinklig zu der Planfläche 32 hingegen durch die Schneidplatte 1' gehalten. In Axialrichtung ist die Schneidplatte 1' durch die Spannpratze 34 und eine Befestigungsschraube 40a festgeklemmt, wohingegen die Schneidplatte 1 in einer Axialrichtung von der Schneidplatte 1' und in der entgegengesetzten Richtung (zum Spannschaftschaft) durch eine axiale Anlage im Plattensitz formschlüssig gehalten ist. Es entsteht somit eine gemischt kraft- und formschlüssige Lagerung des Schneidkörpers 27 bzw. seiner Schneidplatten 1, 1'. Dies ermöglicht sowohl eine präzise und sichere Lagerung des Schneidkörpers 27, der aus zwei Schneidplatten 1, 1' zusammengesetzt ist, die einander formschlüssig halten. Der Plattensitz ist einfach und unkompliziert aufgebaut, wobei der Werkzeugkörper 28 hier wenig geschwächt wird und somit eine hohe Steifigkeit aufweisen kann. Der Schneidplattenwechsel ist besonders einfach - es genügt die Spannpratze 34 zu lösen, um den Schneidkörper 27 entnehmen und ersetzten zu können. Außerdem kann der Schneidkörper 27 gewendet werden, um mit seinem bislang im Plattensitz versteckt liegenden Schneidkanten weiterzuarbeiten.

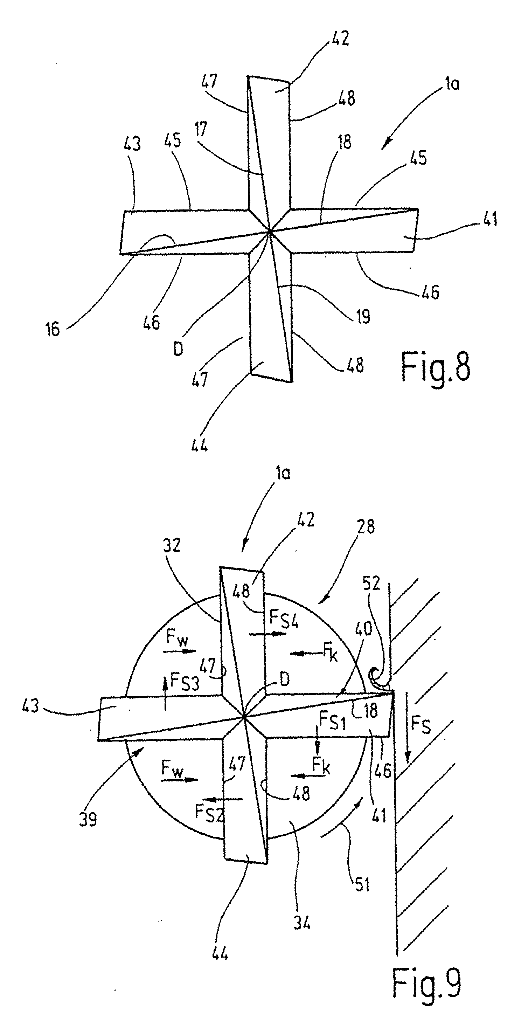

Alternativ zu der reibschlüssigen Klemmung kann die Schneidplatte 1 auch formschlüssig gehalten werden. Dazu ist es z.B. möglich, in der Schneidplatte 1' Vertiefungen vorzusehen, denen entsprechende Vorsprünge an dem Plattensitz 31 und/oder der Klemmpratze 34 zugeordnet sind. Dies gilt auch für die später beschriebene Ausführungsform nach Figur 8.

Der vierflüglige Schneidkörper ist aus zwei einfachen plattenförmigen Schneidplatten 1, 1' zusammengesetzt, die dazu entsprechende Ausnehmungen 6 aufweisen, mit denen sie ineinander gesteckt sind. Bedarfsweise kann der Schneidkörper 27 z.B. zum Wechsel einzelner Schneidplatten demontiert werden, indem die Schneidplatten 1, 1' auseinander gezogen werden. Es ergibt sich somit ein vierschneidiges Zerspanungswerkzeug, dass lediglich zwei identisch ausgebildete plattenförmige Schneidplatten 1 aufweist, die durch eine einzige Klemmschraube 31 an dem Werkzeugkörper 28 gehalten sind.

In Figur 8 ist ein Schneidkörper 1a veranschaulicht, der äußerlich im Wesentlichen wie der in Figur 6 veranschaulichte, aus Schneidplatten 1, 1' zusammengesetzte Schneidkörper 27 beschaffen sein kann, dabei jedoch einstückig ausgebildet ist. Der Schneidkörper 1a weist vier Flügel 41, 42, 43, 44 auf, die sich radial von einer Drehachse D weg erstrecken. Die Drehachse D ist eine Symmetrielinie des Schneidkörpers 1a. Die etwa plattenförmigen Flügel 41, 42, 43, 44 fluchten jeweils paarweise miteinander (41 - 43; 42 - 44). Sie weisen jeweils zwei zueinander parallele Flachseiten 45, 46 bzw. 47, 48 auf, die als Anlage- oder Klemmflächen zur Lagerung des Schneidkörpers 1a in dem Werkzeugkörper 28 dienen können. Der Schneidkörper 1a weist im vorliegenden Fall vier Schneidkanten 16, 17, 18, 19 auf, die sich jeweils von einer Außenumfangsstelle, bei der der Schneidkörper 1a seinen größten Durchmesser aufweist, bis zu der Drehachse D erstrecken. Der Schneidkörper 1a kann bedarfsweise wendbar ausgebildet sein, wobei er in Seitenansicht dann etwa dem in Figur 4 veranschaulichten, aus zwei ineinander gesteckten Schneidplatten 1, 1' gebildeten Schneidkörper 27 entspricht. Er bildet dann einen Wendeschneidkörper. Dies hat Vorteile wegen der zweifachen Verwendbarkeit - ist jedoch nicht zwingend.

Der Schneidkörper 21 kann sintermetallurgisch aus Hartmetallpulver hergestellt werden, indem zunächst ein Grünling gepresst und dieser dann gesintert wird. Weitaus vorteilhafter ist es jedoch, den Schneidkörper 1a im Metallspritzgießverfahren herzustellen. Dazu wird bspw. mit geringen Kunststoffzusätzen versehenes Hartmetallpulver in einem Injektion-Moulding-Verfahren in eine Form gepresst, wonach der so entstandene Rohling gesintert wird. Es entsteht der starre vier- oder mehrflüglige Schneidkörper 1a, der an einigen seiner Flügel gespannt werden kann. Dies ist bspw. in Figur 9 veranschaulicht. Der Schneidkörper 1a ist hier in dem Werkzeugkörper 28 gemäß Figur 6 gespannt. Die Klemmpratze 34 spannt den Schneidkörper 1a mit den ebenen Flanken oder Flächen 47, 48 gegen die ebene Anlagefläche 32 mit einer Klemmkraft Fₖ, der einen entsprechende Kraft F_{w} an dem durch die Anlagefläche 32 gebildeten Widerlager entspricht. Damit sind die Flügel 42, 44 des Schneidkörpers 1a mit den Klemmflächen 47, 48 fest eingespannt. Die Flügel 41, 43 hingegen sind im Wesentlichen kräftefrei von den Aufnahmespalten 39, 40 aufgenommen. Spannkräfte sind hier nicht vorhanden. Die Zentrierung der Drehachse D wird letztendlich bewirkt durch die Anlagefläche 32 des Plattensitzes und den Auflagenspalt 39, der den Plattensitz durchsetzt. Im Übergang zwischen den Aufnahmespalten 39, 40 und den Anlageflächen 32, 35 können Abschrägungen, Rundungen oder Ausnehmungen vorgesehen sein, um Ausrundungen zwischen den Flügeln 41, 42, 43, 44 auzunehmen. Solche Ausrundungen in dem jeweiligen Eckbereich zwischen Flügeln des Schneidkörpers verbessern seine Stabilität. Die Kraftübertragung kann noch verbessert werden, wenn alle vier Flügel festgekklemmt werden.

In Betrieb dreht das Werkzeug um die Drehachse D, wie in Figur 9 durch einen Pfeil 51 veranschaulicht ist. Es entsteht dadurch an der jeweils aktiven Schneidkante (hier Schneidkante 18) beim Abheben eines Spans 52 eine Schneidkraft F_{S}, die von dem Schneidkörper 1a auf den Werkzeugkörper 28 zu übertragen ist. Die Übertragung des Antriebsdrehmoments erfolgt dabei auf alle Flügel 41, 42, 43, 44 des Schneidkörpers 1a. Die Schnittkraft FS teilt sich somit mehr oder weniger gleichmäßig auf die vier Flügel 41 bis 44 als Teilschnittkraft Fₛ₁, Fₛ₂, Fₛ₃, Fₛ₄ auf. Die Kraftübertragung erfolgt dabei durch Biegebeanspruchung der Flügel in der Nähe der Drehachse D. In diesem Bereich weist der Schneidkörper 1a jedoch seine größte axiale Länge und seinen größten Querschnitt auf, so dass der Schneidkörper 1a, auch wenn er aus relativ sprödem Material gefertigt ist, hier eine ausreichende Festigkeit aufweist. Durch die Verteilung der an einer Schneidkante entstehenden Kraft auf alle vier Flügel und die somit großflächige Krafteinleitung in den Werkzeugkörper wird insbesondere beim unterbrochenen Schnitt (beim Fräsen) eine hohe Präzision der Schneidenpositionierung und eine hohe Steifigkeit der Lagerung des Schneidkörpers erreicht.

Für ein Zerspanungswerkzeug 2, insbesondere einen Kugelstirnfräser, ist ein Schneidkörper 27 vorgesehen, der aus Hartmetall ausgebildet ist und vier Flügel 41, 42, 43, 44 mit Schneidkanten aufweist. Der in Stirnansicht kreuzförmige Schneidkörper 27 weist Schneidkanten auf, die sich von dem Umfangsbereich des Zerspanungswerkzeugs bis zu seiner Drehachse D oder zumindest nah an diese heran erstrecken. Zur Befestigung des Schneidkörpers 27 an dem Werkzeugkopf 28 genügt eine einfache Klemmvorrichtung wie beispielsweise eine Spannpratze 34. Insbesondere beim unterbrochenen Schnitt bei dem nicht alle Schneidkanten des Schneidkörpers 27 zugleich mit dem Werkstück in Eingriff sind, bewirkt der Schneidkörper eine Verteilung der an einem oder mehreren Flügeln entstehenden Kräften auf alle Flügel, so dass eine gute Kraftübertragung auf den Werkzeugkörper möglich ist.

Der Schneidkörper 27 kann aus zwei einzelnen Schneidplatten 1, 1' zusammengebaut sein, die ineinandergefügt sind.

## Patentansprüche

1. Schneidkörper für ein rotierendes Zerspanungswerkzeug, insbesondere ein Fräswerkzeug, insbesondere einen Kugelkopffräser,
mit vier sich von einer Drehachse (D) weg erstreckenden plattenförmigen Flügeln (41, 42, 43, 44), die jeweils wenigstens eine zwischen einer Freifläche (22) und einer Spanfläche (21) ausgebildete Schneidkante (16, 17, 18, 19) aufweisen, wobei die Schneidkanten (16, 17, 18, 19) einen gemeinsamen, zu der Drehachse (D) konzentrischen Rotationskörper festlegen, und wobei der Schneidkörper (1) aus Hartmetall ausgebildet ist.

2. Schneidkörper nach Anspruch 1, **dadurch gekennzeichnet, dass** die Flügel (41, 42, 43, 44) des Schneidkörpers (1a) in einheitlichen Winkelabständen zueinander angeordnet sind.

3. Schneidkörper nach Anspruch 1, **dadurch gekennzeichnet, dass** die an den Flügeln (41, 42, 43, 44) des Schneidkörpers (1a) vorgesehenen Spannflächen (45, 46, 47, 48) plan ausgebildet sind.

4. Schneidkörper nach Anspruch 1, **dadurch gekennzeichnet, dass** der Schneidkörper (1a) zu der Drehachse (D) liniensymmetrisch ausgebildet ist.

5. Schneidkörper nach Anspruch 1, **dadurch gekennzeichnet, dass** er aus zwei Schneidplatten (1, 1') ausgebildet ist, die jeweils eine schlitzförmige Ausnehmung (6) zur Aufnahme der jeweils anderen Schneidplatte (1') aufweisen.

6. Schneidkörper nach Anspruch 5, **dadurch gekennzeichnet, dass** die Ausnehmung (6) der Schneidplatte (1) drei offene Seiten aufweist, die eine Einführrichtung (15) für eine weitere Schneidplatte (1') festlegen und die zur Aufnahme wenigstens einer identischen Schneidplatte (1') als weitere Schneidplatte (1') eingerichtet ist.

7. Schneidkörper nach Anspruch 5, **dadurch gekennzeichnet, dass** die Ausnehmung (6) wenigstens eine Ausrichtfläche (10) aufweist, der eine gleiche Ausrichtfläche der von der Ausnehmung (6) aufzunehmenden Schneidplatte (1') zugeordnet ist.

8. Schneidkörper nach Anspruch 7, **dadurch gekennzeichnet, dass** die Ausnehmung (6) von mehreren Ausrichtflächen (8, 9, 10) begrenzt ist.

9. Schneidkörper nach Anspruch 7 oder 8, **dadurch gekennzeichnet, dass** die Ausrichtflächen (8, 9, 10) Planflächen sind.

10. Schneidkörper nach Anspruch 5, **dadurch gekennzeichnet, dass** die Ausnehmung (6) ein länglicher Schlitz ist, der sich von dem Rand der Schneidplatte (1) in Richtung auf ihre gegenüberliegende Seite erstreckt.

11. Schneidkörper nach Anspruch 10, **dadurch gekennzeichnet, dass** sich der Schlitz bis zu der Mitte (7) der Schneidplatte (1) erstreckt.

12. Schneidkörper nach Anspruch 7 und 11, **dadurch gekennzeichnet, dass** die Ausrichtfläche (10) eine Endfläche ist, die den Schlitz an der Schneidplattenmitte (7) abschließt.

13. Schneidkörper nach Anspruch 7, **dadurch gekennzeichnet, dass** an jeder Schneidplatte (1, 1') zwei Ausrichtflächen (8, 9) der Ausrichtflächen (8, 9, 10) parallel zueinander ausgerichtet sind.

14. Schneidkörper nach Anspruch 5, **dadurch gekennzeichnet, dass** die Schneidplatte (1) einen Grundkörper (3) aufweist, der mit Ausnahme der Ausnehmung (6) bezüglich einer ersten Symmetrielinie (12) liniensymmetrisch ausgebildet ist, die quer zu der Einführrichtung (15) ausgerichtet ist.

15. Schneidkörper nach Anspruch 5, **dadurch gekennzeichnet, dass** die Schneidplatte (1) einen Grundkörper (3) aufweist, der liniensymmetrisch bezüglich einer zweiten Symmetrielinie (14) ausgebildet ist, die durch die Schneidplattenmitte (7) geht und mit der Einführrichtung (15) übereinstimmt.

16. Schneidkörper nach Anspruch 14 und 15, **dadurch gekennzeichnet, dass** sie einen scheibenförmigen Grundkörper (3) mit zwei zueinander parallelen Flachseiten (4, 5) aufweist, wobei die Ausnehmung (6) der Schneidplatte (1) derart ausgebildet ist, dass zwei identische Schneidplatten (1, 1') mit einem Winkelversatz von 180° um die erste Symmetrielinie (12) und einem anderen Winkelversatz um die zweite Symmetrielinie (14) mit ihren Ausnehmungen (6) einander aufnehmend zusammenfügbar sind.

17. Schneidkörper nach Anspruch 5, **dadurch gekennzeichnet, dass** die Schneidplatten (1, 1') in zusammengefügtem Zustand bei Drehung um die zweite Symmetrieachse (14) an jeder Stelle ihres Außenumrisses auf einem gemeinsamen Flugkreis liegen.

18. Schneidkörper nach Anspruch 16, **dadurch gekennzeichnet, dass** die Schneidplatten (1, 1') so ausgebildet sind, dass sie in zusammengefügtem Zustand formschlüssig aneinander gehalten sind und in Einsteckrichtung (15) formschlüssig aneinander anliegen.

19. Schneidkörper nach Anspruch 5, **dadurch gekennzeichnet, dass** jede Schneidplatte (1, 1') jeweils vier Schneidkanten (16, 17, 18, 19) aufweist.

20. Zerspanungswerkzeug mit zwei Schneidplatten (1, 1') nach Anspruch 5, wobei die Schneidplatten (1, 1') einander mit ihren Ausnehmungen (6) aufnehmen.

21. Zerspanungswerkzeug nach Anspruch 20, **dadurch gekennzeichnet, dass** es einen Werkzeugkörper (28) mit einem Plattensitz (31) aufweist, dem eine gesonderte oder auch mit dem übrigen Werkzeugkörper einstückig ausgebildete Klemmpratze (34) zugeordnet ist.

22. Zerspanungswerkzeug nach Anspruch 20, **dadurch gekennzeichnet, dass** der Plattensitz (31) mit der Klemmpratze (34) einen Klemmspalt (35a) für eine der Schneidplatten (1') oder wenigstens einen Flügel (42) des Schneidkörpers (1a) festlegt und dass quer zu dem Klemmspalt (35a) ein Aufnahmespalt (39, 40) ausgebildet ist, der den Plattensitz (31) und die Klemmpratze (34) schneidet und der zur Aufnahme der anderen Schneidplatte (1) oder anderer Flügel (43) des Schneidkörpers (1a) eingerichtet ist.

23. Zerspanungswerkzeug nach Anspruch 22, **dadurch gekennzeichnet, dass** die von dem Aufnahmespalt (39, 40) aufgenommene Schneidplatte (1) in Axialrichtung (15) des Zerspanungswerkzeugs (2) durch die in dem Klemmspalt (35a) vorzugsweise reibschlüssig gehaltene Schneidplatte (1') und den Plattensitz formschlüssig gehalten ist.

## Claims

1. Cutting insert for a rotating machine tool, in particular a milling tool, in particular a ball-type milling cutter,
with four blade-shaped wings (41, 42, 43, 44), which extend away from a rotational axis (D) and which respectively have at least one cutting edge (16, 17, 18, 19) formed between a relief flank (22) and a face (21), wherein the cutting edges (16, 17, 18, 19) define a joint rotary body concentric to the rotational axis (D), and wherein the cutting insert (1) is made of hard metal.

2. Cutting insert according to Claim 1, **characterised in that** the wings (41, 42, 43, 44) of the cutting insert (1a) are arranged at uniform angular distances from one another.

3. Cutting insert according to Claim 1, **characterised in that** the clamping surfaces (45, 46, 47, 48) provided on the wings (41, 42, 43, 44) of the cutting insert (1a) are of plane construction.

4. Cutting insert according to Claim 1, **characterised in that** the cutting insert (1a) is constructed linearly symmetric to the rotational axis (D).

5. Cutting insert according to Claim 1, **characterised in that** it is formed from two cutting blades (1, 1'), which respectively have a slot-shaped recess (6) to receive the respective other cutting blade (1').

6. Cutting insert according to Claim 5, **characterised in that** the recess (6) of the cutting blade (1) has three open sides, which define a direction of insertion (15) for a further cutting blade (1'), and said recess is fitted to receive at least an identical cutting blade (1') as further cutting blade (1').

7. Cutting insert according to Claim 5, **characterised in that** the recess (6) has at least one locating face (10), with which an identical locating face of the cutting blade (1') to be received by the recess (6) is associated.

8. Cutting insert according to Claim 7, **characterised in that** the recess (6) is bordered by several locating faces (8, 9, 10).

9. Cutting insert according to Claim 7 or 8, **characterised in that** the locating faces (8, 9, 10) are plane faces.

10. Cutting insert according to Claim 5, **characterised in that** the recess (6) is an elongated slot, which extends from the edge of the cutting blade (1) towards its opposite side.

11. Cutting insert according to Claim 10, **characterised in that** the slot extends as far as the centre (7) of the cutting blade (1).

12. Cutting insert according to Claims 7 and 11, **characterised in that** the locating face (10) is an end face which closes the slot at the centre (7) of the cutting blade.

13. Cutting insert according to Claim 7, **characterised in that** on each cutting blade (1, 1') two locating faces (8, 9) of the locating faces (8, 9, 10) are aligned parallel to one another.

14. Cutting insert according to Claim 5, **characterised in that** the cutting blade (1) has a base body (3), which with the exception of the recess (6) is constructed linearly symmetric with respect to a first line of symmetry (12), which is aligned transversely to the direction of insertion (15).

15. Cutting insert according to Claim 5, **characterised in that** the cutting blade (1) has a base body (3), which is constructed linearly symmetric with respect to a second line of symmetry (14), which passes through the centre (7) of the cutting blade and coincides with the direction of insertion (15).

16. Cutting insert according to Claims 14 and 15, **characterised in that** it has a disc-shaped base body (3) with two parallel flat sides (4, 5), wherein the recess (6) of the cutting blade (1) is configured in such a manner that by an angular displacement of 180° around the first line of symmetry (12) and another angular displacement around the second line of symmetry (14), two identical cutting blades (1, 1') can be joined together to receive one another via their recesses (6).

17. Cutting insert according to Claim 5, **characterised in that** when in joined position, the cutting blades (1, 1') lie on a joint orbit at each point of their outer contour on rotation around the second axis of symmetry (14).

18. Cutting insert according to Claim 16, **characterised in that** the cutting blades (1, 1') are configured in such a manner that when in joined position, they are held positively against one another and abut positively against one another in the direction of insertion (15).

19. Cutting insert according to Claim 5, **characterised in that** each cutting blade (1, 1') respectively has four cutting edges (16, 17, 18, 19).

20. Machine tool with two cutting blades (1, 1') according to Claim 5, wherein the cutting blades (1, 1') receive one another via their recesses (6).

21. Machine tool according to Claim 20, **characterised in that** it has a tool body (28) with a blade seat (31), with which a clamping claw (34), which is separate or constructed in one piece with the rest of the tool body, is associated.

22. Machine tool according to Claim 20, **characterised in that** the blade seat (31) with the clamping claw (34) defines a clamping slot (35a) for one of the cutting blades (1') or at least one wing (42) of the cutting insert (1a), and that transversely to the clamping slot (35a) a receiving slot (39, 40) is formed, which intersects the blade seat (31) and the clamping claw (34) and which is fitted to receive the other cutting blade (1) or other wing (43) of the cutting insert (1a).

23. Machine tool according to Claim 22, **characterised in that** the cutting blade (1) received by the receiving slot (39, 40) is positively held in axial direction of the machine tool (2) by the cutting blade (1'), which is preferably frictionally engaged in the clamping slot (35a), and the blade seat.

## Revendications

1. Elément de coupe pour un outil à enlèvement de copeaux rotatif, en particulier pour une fraise, et en particulier pour une fraise à bout sphérique,
avec quatre ailes (41, 42, 43, 44) en forme de plaquettes qui s'étendent à partir d'un axe de rotation (D) et présentent chacune au moins une arête de coupe (16, 17, 18, 19) formée entre une face de dépouille (22) et une face de coupe (21), les arêtes de coupe (16, 17, 18, 19) définissant un corps de révolution commun, concentrique avec l'axe de rotation (D), et l'élément de coupe (1) étant en métal dur.

2. Elément de coupe selon la revendication 1, **caractérisé en ce que** les ailes (41, 42, 43, 44) de l'élément de coupe (1a) sont disposées à distance angulaire constante les unes des autres.

3. Elément de coupe selon la revendication 1, **caractérisé en ce que** les surfaces de serrage (45, 46, 47, 48) prévues sur les ailes (41, 42, 43, 44) de l'élément de coupe (1a) sont planes.

4. Elément de coupe selon la revendication 1, **caractérisé en ce que** l'élément de coupe (1a) présente une symétrie axiale par rapport à l'axe de rotation (D).

5. Elément de coupe selon la revendication 1, **caractérisé en ce qu'**il est formé de deux plaquettes de coupe (1, 1'), qui présentent chacune une échancrure (6) en forme de fente pour recevoir l'autre plaquette de coupe (1').

6. Elément de coupe selon la revendication 5, **caractérisé en ce que** l'échancrure (6) de la plaquette de coupe (1) présente trois côtés ouverts, qui définissent une direction d'insertion pour une plaquette de coupe (1') supplémentaire, et est agencée pour recevoir au moins une plaquette de coupe (1') identique, comme plaquette de coupe (1') supplémentaire.

7. Elément de coupe selon la revendication 5, **caractérisé en ce que** l'échancrure (6) présente au moins une surface d'alignement (10), à laquelle est associée une surface d'alignement identique de l'échancrure (6) de la plaquette de coupe (1') supplémentaire.

8. Elément de coupe selon la revendication 7, **caractérisé en ce que** l'échancrure (6) est délimitée par plusieurs surfaces d'alignement (8, 9, 10).

9. Elément de coupe selon la revendication 7 ou 8, **caractérisé en ce que** les surfaces d'alignement (8, 9, 10) sont des surfaces planes.

10. Elément de coupe selon la revendication 5, **caractérisé en ce que** l'échancrure (6) est une fente allongée, qui s'étend depuis le bord de la plaquette de coupe (1) en direction de son côté opposé.

11. Elément de coupe selon la revendication 10, **caractérisé en ce que** la fente s'étend jusqu'au milieu (7) de la plaquette de coupe (1).

12. Elément de coupe selon les revendications 7 et 11, **caractérisé en ce que** la surface d'alignement (10) est une surface d'extrémité, qui termine la fente au niveau du milieu (7) de la plaquette de coupe.

13. Elément de coupe selon la revendication 7, **caractérisé en ce que** sur chaque plaquette de coupe (1, 1'), deux surfaces d'alignement (8, 9), parmi les surfaces d'alignement (8, 9, 10), sont mutuellement parallèles.

14. Elément de coupe selon la revendication 5, **caractérisé en ce que** la plaquette de coupe (1) présente un corps de base (3), qui, à l'exception de l'échancrure (6), présente une symétrie axiale par rapport à un premier axe de symétrie (12) perpendiculaire à la direction d'insertion (15).

15. Elément de coupe selon la revendication 5, **caractérisé en ce que** la plaquette de coupe (1) présente un corps de base (3), qui présente une symétrie axiale par rapport à un deuxième axe de symétrie (14) passant par le centre (7) de la plaquette de coupe et coïncidant avec la direction d'insertion (15).

16. Elément de coupe selon les revendications 14 et 15, **caractérisé en ce que** la plaquette de coupe (1) présente un corps de base (3) en forme de disque, avec deux faces planes (4, 5) mutuellement parallèles, l'échancrure (6) de la plaquette de coupe (1) étant agencée de telle sorte que deux plaquettes de coupe (1,1') identiques, avec un décalage angulaire de 180° par rapport au premier axe de symétrie (12) et un autre décalage angulaire par rapport au deuxième axe de symétrie (14), puissent être assemblées par engagement réciproque des leurs échancrures.

17. Elément de coupe selon la revendication 5, **caractérisé en ce que** les plaquettes de coupe (1, 1'), à l'état assemblé, lors d'une rotation autour du deuxième axe de symétrie (14), en tout point de leur contour extérieur sont situées sur une même orbite.

18. Elément de coupe selon la revendication 16, **caractérisé en ce que** les plaquettes de coupe (1, 1') sont agencées de telle sorte qu'à l'état assemblé, elles soient tenues entre elles par complémentarité de formes et soient en contact réciproque par complémentarité de formes dans la direction d'insertion (15).

19. Elément de coupe selon la revendication 5, **caractérisé en ce que** chaque plaquette de coupe (1, 1'), présente chaque fois quatre arêtes de coupe (16, 17, 18, 19).

20. Outil de coupe muni de deux plaquettes de coupe (1, 1') selon la revendication 5, les plaquettes de coupe (1, 1') s'emboîtant l'une dans l'autre avec leurs échancrures (6).

21. Outil de coupe selon la revendication 20, **caractérisé en ce qu'**il comporte un corps d'outil (28) avec un siège de plaquette (31), auquel est associée une bride de serrage (34) séparée ou formée d'une pièce avec le reste du corps d'outil.

22. Outil de coupe selon la revendication 20, **caractérisé en ce que** le siège de plaquette (31) définit avec la bride de serrage (34), une fente de serrage (35a) pour l'une des plaquettes de coupe (1'), ou au moins une aile (42) de l'élément de coupe (1a), et **en ce que** transversalement à la fente de serrage (35a) est aménagée une fente réceptrice (39, 40), qui est sécante avec le siège de plaquette (31) et la bride de serrage (34) et est agencée pour recevoir l'autre plaquette de coupe (1), ou l'autre aile (43) de l'élément de coupe (1a).

23. Outil de coupe selon la revendication 22, **caractérisé en ce que** la plaquette de coupe (1) insérée dans la fente réceptrice (39, 40), dans la direction axiale (15) de l'outil de coupe (2), est tenue par complémentarité de formes par la plaquette de coupe (1'), tenue de préférence par frottements, et par le siège de plaquette.
